Europäisches Patentamt

European Patent Office

Office européen des brevets

(11) Veröffentlichungsnummer: **0 141 196**
**A2**

# (12) EUROPÄISCHE PATENTANMELDUNG

(21) Anmeldenummer: **84110942.4**

(22) Anmeldetag: **13.09.84**

(51) Int. Cl.⁴: **E 05 F 15/20**

(30) Priorität: **13.09.83 DE 3333041**

(43) Veröffentlichungstag der Anmeldung:
**15.05.85 Patentblatt 85/20**

(84) Benannte Vertragsstaaten:
**AT DE FR IT**

(71) Anmelder: **Knorr-Bremse GmbH**
**Moosacher Strasse 80**
**D-8000 München 40(DE)**

(72) Erfinder: **Geist, Josef**
**Weldengasse 26/4A/10**
**A-1100 Wien(AT)**

(72) Erfinder: **Lorenz, Walter**
**Hütteldorfer Strasse 226b**
**A-1140 Wien(AT)**

(54) Übertragungseinrichtung für Wagen- bzw. Zugsteuerinformationen, insbesondere für Steuersignale.

(57) Die Übertragungseinrichtung weist zur Übertragung von Wagen- bzw. Zugsteuerinformationen, insbesondere von Steuersignalen, eine kontaktlose Übertragungsvorrichtung auf, welche mittels Sende- und Empfangseinrichtungen für vorzugsweise Infrarotstrahlungen die Informationen bzw. Signale über den Fahrzeugabstand zweier gekuppelter Fahrzeuge überträgt. Die Übertragungseinrichtung ist besonders als Steuereinrichtung für eine Türe geeignet, der mit Abstand eine weitere Türe zuordenbar ist, also insbesondere für der Übergangsbrücke zweier gekuppelter Schienenfahrzeuge zugeordnete Stirntüren. Die Steuereinrichtung weist eine Sendeeinrichtung (31) und eine Empfangseinrichtung (29) für insbesondere Infrarotstrahlung auf. Die Empfangseinrichtung (29) empfängt die von der Sendeeinrichtung (31) der weiteren Türe oder die von der Sendeeinrichtung (31) ausgehende und an der weiteren Türe reflektierte Strahlung und gibt in Abhängigkeit vom Öffnungszustand der weiteren Türe ein Hilfssignal ab, welches ein Öffnen der Stirntüre für eine bestimmte Zeitspanne bewirkt. Nach Öffnen der einen Türe öffnet sich somit selbsttätig jeweils die weitere Türe ebenfalls, so daß ein ungehinderter Durchgang freigegeben wird.

Fig 2

Croydon Printing Company Ltd.

0141196

Knorr-Bremse GmbH

Moosacher Straße 80

8000 München 40

München, 10.09.1984

TP-sh/ma

unser Zeichen: 200097/1754

Text.Nr.: 0046P

Übertragungseinrichtung für Wagen- bzw. Zugsteuerinformationen,
insbesondere für Steuersignale

Die Erfindung bezieht sich auf eine Übertragungseinrichtung für Wagen-
bzw. Zugsteuerinformationen, insbesondere für Steuersignale, welche
zwischen zwei oder mehreren miteinander gekuppelten Schienenfahrzeugen
übertragen werden müssen.

Bekannte, derartige Eirichtungen übertragen die Steuer- bzw.
Informationssignale über in die Fahrzeugleitung integrierte,
elektrische Leiter, Lichtleiter oder Sende- und Empfangseinrichtungen
für elektrische Wellen (die DE-OS 1 755 968). Ein gravierender Nachteil
dieser bekannten Einrichtungen ist einerseits durch die hohe
Beschädigungsgefahr im Kupplungsbereich, andererseits- bedingt durch
die Bodennähe- die hohe Verschmutzungsgefahr bei offenen Kupplungen
sowie die daraus resultierende Funktionsunsicherheit bei
Wiederverwendung der zuvor offenen Kupplung gegeben.

Es ist Aufgabe der Erfindung, eine Übertragungseinrichtung der eingangs
genannten Art derart auszubilden, daß die Steuerinformation von zwei
oder mehreren gekuppelten Fahrzeugen vom steuernden Fahrzeug aus an die
anderen Fahrzeuge sicher weitergegeben wird, wobei die eingangs
erwähnte Beschädigungsgefahr und die Funktionsunsicherheit durch
Verschmutzung weitestgehend vermieden werden.

Diese Aufgabe wird nach der Erfindung dadurch gelöst, daß eine
kontaktlose Übertragungseinrichtung für die in den Wagen auftretenden
Zugsteuerinformationen bzw. Steuersignale vorgesehen ist.

Dabei ist es nach der weiteren Erfindung zweckmäßig, wenn die Übertragungseinrichtung eine Sende- und Empfangseinrichtung für eine gerichtete Strahlung aufweist, mit deren Hilfe die Zugsteuerinformationen bzw. Steuersignale über die durch den Fahrzeugabstand zweier gekuppelter Schienenfahrzeuge vorgegebene Distanz übertragen werden.

Dabei ist es des weiteren zweckmäßig, wenn die Strahlung, eine Funk-, Mikrowellen-, Infrarot- oder ähnliche Strahlung ist, wobei die Infrarotstrahlung besonders zweckmäßig verwendbar ist.

Weiterhin ist es nach der Erfindung zweckmäßig, die Übertragungseinrichtung an der Außenseite der einander zugewandten, strahlungsundurchlässigen Stirnflächen der gekuppelten Fahrzeuge zu montieren. Falls die Stirnflächen dagegen strahlungsdurchlässige Bereiche aufweisen, ist es nach der Erfindung vorteilhaft, die Montage hinter strahlungsdurchlässigen, unbeweglichen Stirnflächenabschnitten im Innenraum der gekuppelten Fahrzeuge mit gegenseitigem Strahlungskontakt vorzunehmen.

Die Übertragungseinrichtung ist besonders vorteilhaft zur Türsteuerung von insbesondere Stirntüren von Schienenfahrzeugen verwendbar. Die Übergangsbrücken zweier miteinander gekuppelter Reisezug-Schienenfahrzeuge sind beiderseits von Stirntüren der beiden Schienenfahrzeuge abgeschlossen. Für diese Stirntüren sind kraftbetätigte Öffnungeinrichtungen bekannt, welche nach kurzer, willkürlicher Betätigung beispielsweise eines Öffnungshandgriffes ein vollständiges Öffnen der Türe und nach Ablauf einer bestimmten Zeitspanne ein Wiederschließen der Türe bewirken. Es sind auch bereits Steuereinrichtungen für diese Stirntüren bekannt, welche vollständig sebsttätig arbeiten, beispielsweise mittels einer Lichtschranke, die von sich der Stirntüre nähernden Personen zu passieren ist, oder mittels einer Druckdose, welche vor der Stirntüre in den Fußboden eingelassen ist und von den sich der Stirntüre nähernden Personen betreten wird; die Lichtschranke gibt bei ihrer Unterbrechung und die Druckdose beim Druckanstieg beim Betreten durch eine Person

Schaltimpulse ab, welche ein Öffnen der Stirntüre bewirken. Insbesondere aus witterungsbedingten Gründen konnten derartige, vollselbsttätige Steuereinrichtungen bisher jedoch nur fahrzeuginnenseitig an den Stirntüren angeordnet werden. Es ist jedoch wünschenswert, daß sich vor einer von einem Reisezugwagen über die Übergangsbrücke zum anderen Reisezugwagen gehenden Person nicht nur die erste, vor der Übergangsbrücke befindliche Stirntüre voll selbsttätig öffnet, während die zweite, den zu betretenden Reisezugwagen zugehörende Stirntüre von Hand geöffnet oder wenigstens angesteuert werden muß, sondern daß sich auch die zweite Stirntüre voll selbsttätig vor der Person öffnet. Es ist daher eine weitere Aufgabe der Erfindung, eine Übertragungseinrichtung der vorstehend genannten Art so weiterzubilden, daß sie zur Steuerung von Fahrzeug- Stirntüren geeignet ist.

Hierzu ist es nach der weiteren Erfindung zweckmäßig, wenn die Übertragungseinrichtung zur Steuerung einer Türe, der mit Abstand eine weitere Türe zuordenbar ist, insbesondere für eine einer Übergangsbrücke zugeordnete Stirntüre von Schienenfahrzeugen, mit einer durch ein Schaltsignal ansteuerbaren, kraftbetätigten Öffnungseinrichtung, derart ausgebildet ist, daß die Übertragungseinrichtung als berührungsfreie Abtasteinrichtung für den Öffnungszustand der weiteren Türe zur Abgabe des Schaltsignals oder eines diesem gleichwertigen Hilfssignals beim Öffnen der weiteren Türe vorgesehen ist.

Falls die Türe und die weitere Türe im wesentlichen gleichartige Steuereinrichtungen aufweisen können, wobei das von einer Person auslösbare Schaltsignal über ein eine Abfallverzögerung des Schaltsignals bewirkendes Zeitglied einem bei anstehenden Schaltsignal die Öffnungskraft für die Türe freigebenden Schaltorgan zugeführt wird, kann es nach der weiteren Erfindung vorteilhaft sein, wenn das Schaltsignal die bei vorhandenem Schaltsignal die Strahlung abgebende Sendeeinrichtung ansteuert und wenn die Empfangseinrichtung ein Hilfssignal abgibt, daß parallel zum Schaltsignal, gegebenenfalls über ein ODER-Glied, dem Eingang des Zeitgliedes zuführbar ist. Dabei ist es des weiteren zweckmäßig, wenn die Türe und die weitere Türe mit je einer eine Sende- und Empfangseinrichtung aufweisenden Steuereinrichtung ausgestattet sind, wobei die Sendeeinrichtung der einen Türe auf die ständig betriebsbereite und bei Empfang einer Strahlung das Hilfssignal abgebende Empfangseinrichtung der jeweils anderen Türe ausgerichtet ist.

Falls die Steuereinrichtung der Türe andersartig als die Steuereinrichtung der weiteren Türe ausgebildet sein kann, die weitere Türe evtl. überhaupt keine Steuereinrichtung aufweist, kann es für die Steuereinrichtung der Türe, bei welcher das von einer Person auslösbare Schaltsignal über ein eine Abfallverzögerung des Schaltsignals bewirkendes Zeitglied einem bei anstehenden Schaltsignal die Öffnungskraft für die Türe freigebenden Schaltorgan zugeführt wird, nach der weiteren Erfindung zweckmäßig sein, wenn die ständig von der Sendeeinrichtung ausgehende Strahlung nach Reflexion an der weiteren Türe der Empfangseinrichtung zuführbar ist, welche bei geöffneter, weiterer Türe entsprechendem Reflexionszustand, gegebenenenfalls Unterbrechung der empfangenen Strahlung, ein Hilfssignal abgibt, das parallel zum Schaltsignal, gegebenenfalls über ein ODER-Glied dem Eingang des Zeitgliedes zuführbar ist.

Falls bei gekuppelten Schienenfahrzeugen gemeinsame Steuer- und Informationsleitungen derart vorliegen, daß sie über die Kupplung miteinander verbunden sind, kann erfindungsgemäß die vorhandene Leitung an die Übertragungseinrichtung angeschlossen und somit aus dem Kupplungsbereich entfernt werden.

In den Zeichnungen sind Ausführungsbeispiele für nach der Erfindung ausgebildete Übertragungseinrichtungen dargestellt, wobei

Fig. 1     und

Fig. 2     ein Ausführungsbeispiel für eine nach der Erfindung
           ausgebildete Steuereinrichtung für Fahrzeugtüren und

Fig. 3     eine Übertragungseinrichtung für Wagen- bzw.
           Zugsteuerinformation, die gegebenenfalls zusätzlich
           zur Türsteuerung verwendbar ist, zeigen.

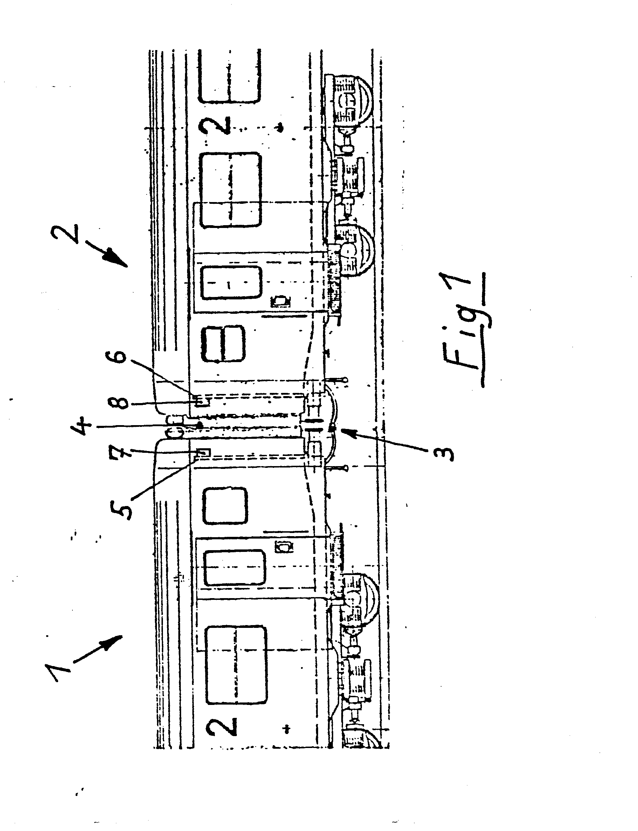

In Figur 1 sind zwei miteinander gekuppelte Schienenfahrzeuge 1und 2 eines Reisezuges dargestellt, wobei die Kupplungsstelle 3 von einer Übergangsbrücke 4 überbrückt ist. Die Übergangsbrücke 4 ist beiderseits gegen die Innenräume der Schienenfahrzeuge 1 und 2 durch je eine Stirntüre 5 bzw. 6 abtrennbar, so daß eine beispielsweise vom Schienenfahrzeug 1 über die Übergangsbrücke 4 zum Schienenfahrzeug 2 gehende Person erst die Stirntüre 5 und dann die weitere, dieser mit Abstand zugeordnete Stirntüre 6 passieren muß. Die Stirntüre 5 ist mit einer Steuereinrichtung 7 und die weitere Stirntüre 6 mit einer Steuereinrichtung 8 ausgestattet, wobei die Steuereinrichtung 7 und 8 dem kraftbetätigten Öffnen der ihnen jeweils zugeordneten Stirntüre 5 bzw. 6 dienen.

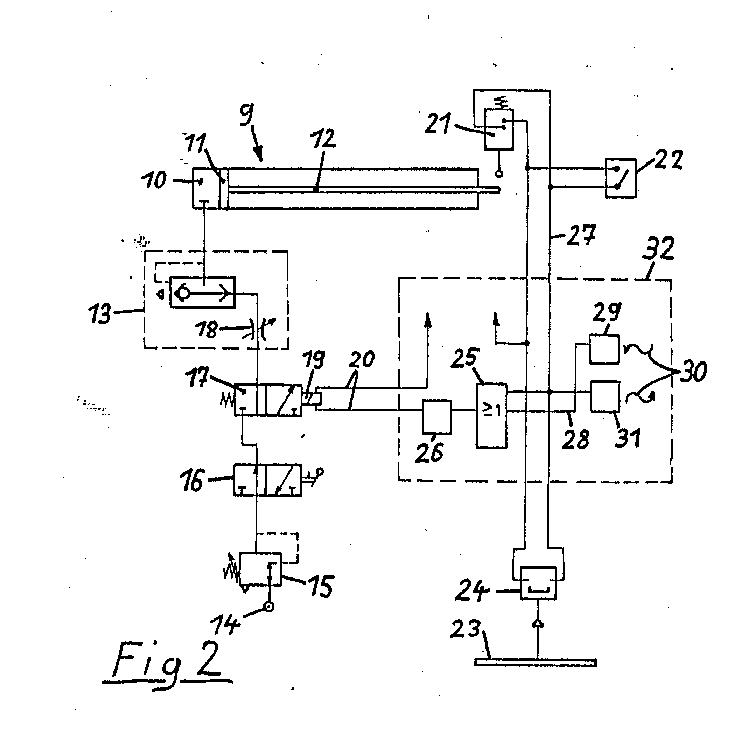

Die gemäß dem Ausführungsbeispiel jeweils gleichartig ausgebildeten Steuereinrichtungen 7 und 8 weisen jeweils den aus Fig. 2 ersichtlichen Aufbau auf. Hiernach weist jede Steuereinrichtung 7 oder 8 wenigstens einen Zylinder 9 auf, dessen vom Druck in einem Zylinderraum 10 beaufschlagbarer Kolben 11 über eine Kolbenstange 12 mit der jeweiligen, nicht dargestellten Stirntüre 5 oder 6 nach Fig. 1 gekoppelt ist; beim Ausfahren der Kolbenstange 12 aus dem Zylinder 9 wird die Stirntüre 5 oder 6 entgegen einer ständig wirksamen Kraft, beispielsweise einer nicht dargestellten, die Stirntüre in Schließrichtung belastenden Federkraft geöffnet. Der Zylinderraum 10 ist über ein drosselbares Schnellentlüftungsventil 13 druckbeaufschlagbar bzw. entleerbar; eine Druckluftquelle 14 ist über ein Druckminderventil 15, einen Absperrhahn 16 und ein Magnetventil 17 mit der einstellbaren Drossel 18 des Schnellentlüftungsventils 13 verbindbar. Die Erregungsspule 19 des im unerregten Zustand die Drossel 18 absperrenden, im Erregungszustand über den Absperrhahn 16 und das Druckminderventil 15 mit der Druckluftquelle 14 verbindenden Magnetventils 17 ist in einen Stromkreis 20 eingeschaltet, der durch Schließen eines Einweg-Rollenschalters 21, eines beispielweise durch eine nicht dargestellte Lichtschranke betätigbaren Schalters 22 oder eines von der Druckdose 23 bei deren Betreten schließbaren Membranschalters 24 über ein ODER-Glied 25 und ein Zeitrelais 26 erregbar ist. Die Steuereinrichtung muß dabei bloß einen der Schalter 21, 22 oder 24, kann aber auch mehrere dieser Schalter aufweisen; das Zeitrelais 26 gibt einem von den Schaltern über das ODER-Glied zu ihm gelangenden Schaltimpuls sofort zur Erregungsspule 19 weiter, seine eingestellte Zeit beginnt erst bei Abfall dieses Schaltimpulses abzulaufen, und nach Ablauf der eingestellten Zeitspanne wird die Erregungsspule 19 wieder entregt. Insoweit entspricht die Steuereinrichtung mit Ausnahme des ODER-Gliedes 25 in ihrem Aufbau und ihrer Funktion einer üblichen Türsteuereinrichtung und braucht daher vorerst nicht weiter beschrieben zu werden.

Die Schalter 21, 22 und/oder 24 sind über eine Leitung 27 mit dem ersten Eingang des ODER-Gliedes 25 verbunden, an den zweiten Eingang des ODER-Gliedes 25 ist über eine Leitung 28 der Ausgang einer Empfangseinrichtung 29 für eine Funk-, Mikrowellen-, Infrarot- oder ähnliche Strahlung 30 angeschlossen. Von der Leitung 27 führt eine Abzweigung zu einer Sendeeinrichtung 31, welche bei Signalführung in der Leitung 27 eine Strahlung 30 der vorstehend genannten Art auszustrahlen vermag. Die Sendeeinrichtung 31 der Stirntüre 5 strahlt ihre Strahlung 30 zur Empfangseinrichtung der weiteren Türe 6 und die Sendeeinrichtung der weiteren Türe 6 strahlt ihre Strahlung zur Empfangseinrichtung 29 der Türe 5.

Im Ruhezustand sind sowohl die Türe 5 wie die weitere Türe 6 durch beispielsweise Federkraft geschlossen gehalten. Will eine Person vom Schienenfahrzeug 1 über die Übergangsbrücke 4 zum Schienenfahrzeug 2 gehen, so schließt sie kurzzeitig durch Betätigen eines nicht dargestellten Handgriffes für die Stirntüre 5 oder durch Einleiten einer Öffnungsbewegung für die Stirntüre 5 vermittels eines nicht dargestellten Nockens den Einweg-Rollenschalter 21, schließt den Schalter 22 durch Passieren beispielsweise der diesem Schalter 22 zugeordneten, nicht dargestellten Lichtschranke oder schließt den Membranschalter 24 durch Betreten der Druckdose 23. Das so in der Leitung 27 ausgelöste Schaltsignal gelangt zum einen über das ODER-Glied 25 und das Zeitrelais 26 unverzögert zum Stromkreis 20 und erregt die Erregungsspule 19, so daß das Magnetventil 17 umschaltet und bei geöffnetem Absperrhahn 16 über die Drossel 18 ein Druckbeaufschlagen des Zylinderraumes 10 bewirkt. Die Kolbenstange 12 fährt somit aus dem Zylinder 9 aus und die Stirntüre 5 wird hierdurch geöffnet. Gleichzeitig hierzu gelangt das in der Leitung 27 anstehende Schaltsignal auch zur Sendeeinrichtung 31 und veranlaßt diese, eine von der Empfangseinrichtung der Steuereinrichtung 8 der weiteren Stirntüre 6 zu empfangende Strahlung 30 auszusenden. Hierdurch wird die Steuereinrichtung 8 der weiteren Stirntüre 6 veranlaßt, diese Stirntüre 6 selbsttätig zu öffnen, wie es nachfolgend zur in Fig. 2 dargestellten Steuereinrichtung 7 der Stirntüre 5 beschrieben wird. Nach Abklingen des Schaltsignals in der Leitung 27 durch Öffnen des jeweils betätigten Schalters beginnt die am Zeitrelais 26 eingestellte Zeitspanne abzulaufen, nach deren Beendigung der Stromkreis 20 unterbrochen wird, die Erregungsspule 19 abfällt und das Magnetventil 17 zur Unterbrechung der Drucklufteinspeisung in den Zylinderraum 10 in seine Ausgangsstellung zurückschaltet. Das Schnellentlüftungsventil 13 schaltet infolgedessen um und bewirkt eine rasche und unmittelbare Entlüftung des Zylinderraumes 10, so daß sich die Stirntüre 5 unter ihrer Federbelastung und unter Wiedereinfahren der Kolbenstange 12 in den Zylinder 9 wieder schließt; in der Zwischenzeit hat die Person die Stirntüre 5 passiert und kann durch die geöffnete Stirntüre 6 ungehindert in das Schienenfahrzeug 2 eintreten. Anschließend, nach Ablauf einer bestimmten Zeitspanne, schließt sich auch die Stirntüre 6 selbsttätig wieder, wie es nachfolgend für die Stirntüre 5 beschrieben wird.

Falls die Person vom Schienenfahrzeug 2 zum Schienenfahrzeug 1 gelangen will, öffnet sie die Stirntüre 6, wie vorstehend zur Stirntüre 5 beschrieben ist. Dabei gelangt von der Sendeeinrichtung der Steuereinrichtung 8 der Stirntüre 6 ausgehende Strahlung 30 zur ständig betriebsbereiten Empfangseinrichtung 29, welche infolgedessen in die Leitung 28 ein Hilfssignal einspeist, welches über das ODER-Glied 25 und das Zeitrelais 26 eine sofortige Erregung des Stromkreises 20 und damit der Erregungsspule 19 bewirkt. Das Magnetventil 17 öffnet infolgedessen und bewirkt durch Druckbeaufschlagen des Zylinders 9 ein Öffnen der Stirntüre 5. Nach durch Öffnen der entsprechenden Schalter der Steuereinrichtung 8 bewirktem Abklingen der Strahlung 30 klingt auch das von der Empfangseinrichtung 29 in die Leitung 28 eingespeiste und dem Zeitrelais 26 zugeführte Hilfssignal ab, woraufhin die am Zeitrelais 26 eingestellte Zeitspanne abzulaufen beginnt. Nach Ablauf dieser Zeitspanne entregt das Zeitrelais 26 den Stromkreis 20 mit der Erregungsspule 19, so daß das Magnetventil 17 sich wieder schließt. Die die Stirntüre 5 belastende Feder vermag nun diese Stirntüre 5 unter Zurückdrücken der Kolbenstange 12 in den Zylinder 9 und Entlüften des Zylinderraumes 10 durch das Schnellentlüftungsventil 13 wieder zu schließen. Die am Zeitrelais 26 einzustellende Zeitspanne ist derart zu bemessen, daß während des Ablaufes dieser Zeitspanne die Person die Stirntüre 5 passieren kann.

Es ergibt sich somit, daß, falls eine Person die Stirntüre 5 oder 6 eines Schienenfahrzeuges in der bisher gewohnten Weise öffnet, sich die gegenüberliegende Stirntüre 6 bzw. 5 vollselbsttätig öffnet und für eine Zeitspanne, welche zum Übergang der Person vom einen zum anderen Schienenfahrzeug ausreicht, geöffnet bleibt und sich sodann wieder selbsttätig schließt.

Es ist zweckmäßig, die Empfangs- und Sendeeinrichtung 29 und 31 das ODER-Glied 25 und das Zeitrelais 26, gegebenenfalls auch durch weitere der aus Fig. 2 ersichtlichen Bauteile ergänzt, zu einer in Fig. 2 mit einer gestrichelten Umrahmung 32 umfaßten Baueinheit zusammenzufassen.

In Abänderung des vorstehend erläuterten Ausführungsbeispieles kann die Steuereinrichtung 7 und/oder 8 auch andersartig ausgebildet werden. Beispielsweise ist es möglich, anstelle der Empfangseinrichtung 29 und der Sendeeinrichtung 31 eine Reflexionssende- und Empfangseinrichtung vorzusehen, wobei die Sendeeinrichtung ihre Strahlung zur jeweils anderen, der Übergangsbrücke zugeordneten Stirntüre sendet, die Strahlung von dort reflektiert wird und zur Empfangseinrichtung zurückgelangt. Die Sende- und Empfangseinrichtungen sind hierbei ständig betriebsbereit zu halten. Bei geschlossener, der anderen Türe entsprechendem Zustand der reflektierten Strahlung gibt die Empfangseinrichtung hierbei kein Hilfssignal ab; wird die andere Türe geöffnet, so ändert sich die reflektierte Strahlung entsprechend, und die Empfangseinrichtung gibt entsprechend dem geänderten Strahlungseingang ein Hilfssignal über das ODER-Glied an das Zeitrelais ab. Im weiteren entspricht der Aufbau und die Funktion einer derart geänderten Steuereinrichtung dem Ausführungsbeispiel nach Fig. 1 und 2. Der Vorteil dieser Ausführungsform ist darin zu sehen, daß die beiden Stirntüren zu beiden Seiten der Übergangsbrücke nicht gleichartige Steuerungseinrichtungen aufweisen müssen, sondern daß die andere Stirntüre mit einer beliebig ausgebildeten Steuereinrichtung ausgerüstet oder auch nur von Hand betätigbar sein kann; hierdurch wird die Zugzusammenstellung erleichtert.

Bei entsprechendem Ausgang der Empfangseinrichtung 29 kann das ODER-Glied 25 entfallen, die Leitungen 27 und 28 können dabei unmittelbar miteinander verknüpft und mit dem Eingang des Zeitrelais 28 verbunden werden. Weiterhin ist es möglich, die außerhalb der Umrahmung 32 dargestellten Teile der Steuereinrichtung in beliebiger, für Türsteuerungen bekannter Weise zu variieren.

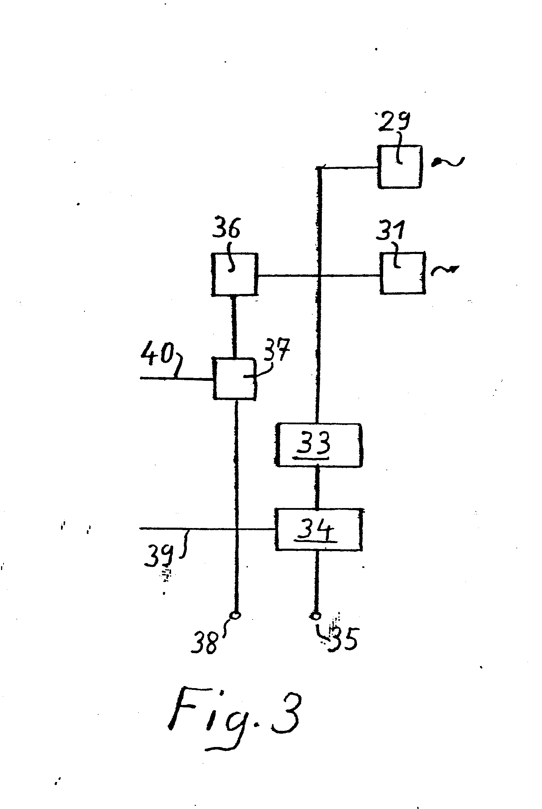

Gemäß Figur 3 ist die Empfangseinrichtung 29 mit einem Demodulator 33 verbunden, von welchem über einen Informationsausgang 35 die Wagen- bzw. Zuginformationen abnehmbar sind. Falls die Übertragungseinrichtung auch für die Türsteuerungen benutzt wird, ist zwischen den Demodulator 33 und dem Informationsausgang 35 ein Informationsselektor 34 eingeordnet, von welchem über eine Leitung 39 der Türsteuerung zuzuführende Signale ableitbar sind. Die Sendeeinrichtung 31 ist mit einem Modulator 36 verbunden, welchem von einem Informationseingang 38 die Wagen- bzw. Zugsteuerinformationen zuleitbar sind. Bei Nutzung der Übertragungseinrichtung zur Türsteuerung ist zwischen den Informationseingang 38 und den Modulator 36 ein Informationsmischer 37 eingeordnet, welchem über eine Leitung 40 von der Türsteuerung her zusätzliche Signale zuführbar sind. Die Leitung 39 ist beispielsweise mit der Leitung 28 gemäß Figur 2 und die Leitung 40 mit der Leitung 27 gemäß Figur 2 zu verbinden, die Empfangseinrichtung 29 und Sendeeinrichtung 31 gemäß Figur 2 werden dabei durch die Anordnung nach Figur 3 mit deren Empfangs- und Sendeeinrichtung 29 und 31 ersetzt. Der Demodulator 33 gibt die ihm von der Empfangseinrichtung 29 zugeführten, modulierten Signale demoduliert an den Informationsselektor 34 weiter, welcher die Türsteuersignale der Leitung 39, die Wagen- bzw. Zugsteuerinformationen dagegen dem Informationsausgang 35 zuführt. Entsprechend führt der Informationsmischer 37 ihm durch den Informationseingang 38 zugeführte Wagen- bzw. Zugsteuerinformationen und durch die Leitung 40 zugeführte Türsteuerungssignale ohne gegenseitig störende Beeinflussungen dem Modulator 36 zu, welcher diese Signale moduliert der Sendeinrichtung 31 zuführt.

Kurzfassung:

Die Übertragungseinrichtung weist zur Übertragung von Wagen- bzw. Zugsteuerinformationen, insbesondere von Steuersignalen, eine kontaktlose Übertragungsvorrichtung auf, welche mittels Sende- und Empfangseinrichtungen für vorzugsweise Infrarotstrahlungen die Informationen bzw. Signale über den Fahrzeugabstand zweier gekuppelter Fahrzeuge überträgt. Die Übertragungseinrichtung ist besonders als Steuereinrichtung für eine Türe geeignet, der mit Abstand eine weitere Türe zuordenbar ist, also insbesondere für der Übergangsbrücke zweier gekuppelter Schienenfahrzeuge zugeordnete Stirntüren. Die Steuereinrichtung weist eine Sendeeinrichtung (31) und eine Empfangseinrichtung (29) für insbesondere Infrarotstrahlung auf. Die Empfangseinrichtung (29) empfängt die von der Sendeeinrichtung (31) der weiteren Türe oder die von der Sendeeinrichtung (31) ausgehende und an der weiteren Türe reflektierte Strahlung und gibt in Abhängigkeit vom Öffnungszustand der weiteren Türe ein Hilfssignal ab, welches ein Öffnen der Stirntüre für eine bestimmte Zeitspanne bewirkt. Nach Öffnen der einen Türe öffnet sich somit selbsttätig jeweils die weitere Türe ebenfalls, so daß ein ungehinderter Durchgang freigegeben wird.

Knorr-Bremse GmbH

Moosacher Straße 80

8000 München 40

München, 10.09.1984

TP-sh/ma

unser Zeichen: 200097/1754

Text.Nr.: 0046P

Patentansprüche

1) Übertragungseinrichtung für Wagen- bzw. Zugsteuerinformationen, insbesondere für Steuersignale, welche zwischen zwei oder mehreren miteinander gekoppelten Schienenfahrzeugen übertragen werden müssen, dadurch gekennzeichnet, daß eine kontaktlose Übertragungsvorrichtung für die in den Wagen auftretenden Zugsteuerinformationen bzw. Steuersignale vorgesehen ist.

2) Übertragungseinrichtung nach Anspruch 1, gekennzeichnet durch eine Sende- und Empfangseinrichtung für eine gerichtete Strahlung, mit deren Hilfe die Zugsteuerinformation bzw. Steuersignale über die durch den Fahrzeugabstand zweier gekuppelter Schienenfahrzeuge vorgegebene Distanz übertragen wird bzw. werden.

3) Übertragungseinrichtung nach Anspruch 2, dadurch gekennzeichnet, daß die Strahlung eine Funk-, Mikrowellen-, Infrarot- oder ähnliche Strahlung ist.

4) Übertragungseinrichtung nach Anspruch 3, dadurch gekennzeichnet, daß die Strahlung eine Infrarotstrahlung ist.

5) Übertragungseinrichtung nach Anspruch 2, 3 oder 4, gekennzeichnet durch die Montage an der Außenseite der einander zugewandten, strahlungsundurchlässigen, Stirnflächen der gekuppelten Fahrzeuge.

6) Übertragungseinrichtung nach Anspruch 2, 3 oder 4, gekennzeichnet durch eine Montage hinter strahlungsdurchlässigen, unbeweglichen Stirnflächenabschnitten im Innenraum der gekuppelten Fahrzeuge mit gegenseitigem Strahlungskontakt.

7) Übertragungseinrichtung nach einem oder mehreren der vorstehenden Ansprüche, zur Steuerung einer Türe, der mit Abstand eine weitere Türe zuordenbar ist, insbesondere für eine einer Übergangsbrücke zugeordnete Stirntüre (5) von Schienenfahrzeugen, mit einer durch ein Schaltsignal ansteuerbaren kraftbetätigten Öffnungseinrichtung, dadurch gekennzeichnet, daß die Übertragungseinrichtung als berührungsfreie Abtasteinrichtung (31,29) für den Öffnungszustand der weiteren Türe (6) zur Abgabe des Schaltsignals oder eines diesem gleichwertigen Hilfssignals beim Öffnen der weiteren Türe (6) vorgesehen ist.

8) Übertragungseinrichtung nach Anspruch 7, wobei das von einer Person auslösbare Schaltsignal über ein eine Abfallverzögerung des Schaltsignals bewirkendes Zeitglied (26) einem bei anstehendem Schaltsignal die Öffnungskraft für die Türe (5, 6) freigebenden Schaltorgan (17) zugeführt wird dadurch gekennzeichnet, daß das Schaltsignal die bei vorhandenem Schaltsignal die Strahlung (30) abgebende Sendeeinrichtung (31) ansteuert und daß die Empfangseinrichtung (29) ein Hilfssignal abgibt, das parallel zum Schaltsignal, gegebenenfalls über ein ODER-Glied (25), dem Eingang des Zeitgliedes (26) zuführbar ist.

9) Übertragungseinrichtung nach Anspruch 8, dadurch gekennzeichnet, daß die Türe (5) und die weitere Türe (6) mit je einer eine Sende- und Empfangseinrichtung (31, 29) aufweisenden Steuereinrichtung (7, 8) ausgestattet sind, wobei die Sendeeinrichtung (31) der einen Türe (5) auf die ständig betriebsbereite und bei Empfang einer Strahlung (30) das Hilfssignal abgebende Empfangseinrichtung der jeweils anderen Türe (6) ausgerichtet ist.

10) Übertragungseinrichtung nach Anspruch 7, wobei das von einer Person auslösbare Schaltsignal über ein eine Abfallverzögerung des Schaltsignals bewirkendes Zeitglied einem bei anstehendem Schaltsignal die Öffnungskraft für die Türe freigebenden Schaltorgan zugeführt wird, dadurch gekennzeichnet, daß die ständig von der Sendeeinrichtung ausgehende Strahlung nach Reflexion an der weiteren Türe der Empfangseinrichtung zuführbar ist, welche bei geöffneter, weiterer Türe entsprechendem Reflexionszustand, gegebenenfalls Unterbrechung der empfangenen Strahlung, ein Hilfssignal abgibt, das parallel zum Schaltsignal, gegebenenfalls über ein ODER-Glied, dem Eingang des Zeitgliedes zuführbar ist.

11) Übertragungseinrichtung nach einem oder mehreren der vorstehenden Ansprüche, mit gemeinsamen Steuer- und Informationsleitungen an den gekuppelten Schienenfahrzeugen, dadurch gekennzeichnet, daß die Steuer- und Informationsleitungen der Schienenfahrzeuge unter Umgehung des Bereiches der Fahrzeugkupplungen an die Übertragungseinrichtung angeschlossen sind.

_Fig 1_

200097/175

Fig 2

200097/17 0141196

Fig. 3